# EUROPEAN PATENT SPECIFICATION

(11) **EP 2 318 466 B1**
(45) Date of publication and mention of the grant of the patent: **18.06.2014**
(21) Application number: 09808826.3
(22) Date of filing: 20.08.2009
(51) Int. Cl.: B32B 3/12, B32B 37/10, B32B 27/04, B32B 7/12

(54) **METHOD FOR MANUFACTURING A COMPOSITE STRUCTURE AND INTERMEDIATE COMPOSITE STRUCTURE**
VERFAHREN ZUR HERSTELLUNG EINER VERBUNDSTRUKTUR UND INTERMEDIÄRE VERBUNDSTRUKTUR
METHODE DE FABRICATION DE STRUCTURE COMPOSITE ET STRUCTURE COMPOSITE INTERMEDIAIRE

(30) Priority: 19.08.2009 US 544055; 21.08.2008 US 136244 P
(43) Date of publication of application: 11.05.2011
(73) Proprietor: Gulfstream Aerospace Corporation, Savannah, GA 31402-2206 (US)
(72) Inventor: HORNICK, David, C., Midway GA 31320 (US); FILA, Josef, Savannah GA 31419 (US)
(74) Representative: Maiwald Patentanwalts GmbH
(86) International application number: PCT/US2009/054484
(87) International publication number: WO 2010/022247

(56) References cited:
- WO-A2-2006/084117
- US-A- 4 963 215
- US-A1- 2005 126 699
- US-A1- 2005 126 699
- US-B1- 6 849 150
- SANDWICHPANELS.ORG: 'Choosing a Thermoset or Thermoplastic Resin for a Composite Sandwich Panel', [Online] 08 October 2007, Retrieved from the Internet: <URL:http://www.sandwichpanels.org/articles /article_thermoplasticresin.html> [retrieved on 2012-12-06]

## Description

### FIELD OF THE INVENTION

This invention relates to structures and more particularly, to a composite structure that employs pre-cured flat face sheets in its construction.

### BACKGROUND OF THE INVENTION

Currently, curved or shaped composite structures are typically constructed by curing the entire composite structure in a curved tool. Typical composite structures comprise a layup of face sheets impregnated with a matrix material, such as a resin, for example. The lay up of face sheets can be bonded to both sides of a core with an adhesive. The matrix material and adhesive are typically cured in a "one shot" process by placing the entire structure (face sheets and core) in an autoclave for a curing cycle.

The "one shot" curing process has disadvantages. For example, this type of curing can result in a "dimpling" effect on the inside surface of the core, causing degradation in material properties and resulting in a heavier structure. In addition, the dimpling created through the "one shot" curing process may increase the rate at which the structure fails during testing. The "one shot" curing process in an autoclave may also take extended cure times of approximately eight hours or more. The complex techniques currently employed to create these structures, therefore, can increase the cost of the detail tooling while sacrificing structural strength.

US 2005/ 0126699 A1 discloses embodiments and methods regarding "one shot" curing processes. In the description of the prior art to said document it is also disclosed, that prior to "one shot" processes it was known that previously cured cover sheets were directly bonded by an adhesive to a honeycomb core. This non-one-shot process is described as not desirable in US 2005/0126699 A1. Curved surfaces of a tool are not disclosed in said document. WO 2006/084117 A2 discloses thermoforming methods, where pre-assembled composites of a core and adhered outer sheets (core and sheets having similar material characteristics) are placed in a molding tool as a whole. Pre-cured sheets are not disclosed in said document. A further method is disclosed in US 3,539,421, wherein a thermoplastic adhesive is used.

### SUMMARY OF THE INVENTION

In accordance with some embodiments of the invention, a composite panel structure may be constructed by bonding pre-cured flat sheets to a core using adhesive. In addition, the composite panel structures may then be bonded with other panel structures using various splice configurations.

In one embodiment of the invention, a method for manufacturing a composite panel structure is defined according to claim 1.

In another embodiment of the invention, a composite structure is defined according to claim 9.

### BRIEF DESCRIPTION OF DRAWINGS

Figure 1 is a schematic view of a composite structure panel according to an embodiment of an invention.
Figure 2 is a view of a completed composite structure panel according to an embodiment of the invention.
Figure 3 is an example of a method of fabricating a composite structure panel and its implementation into a larger structure according to an embodiment of the invention.
Figure 4 depicts fitting a pre-cured face sheet to a curved tool according to an embodiment of the invention.
Figure 5 depicts fitting a core to a pre-cured face sheet on a curved tool in accordance with an embodiment of the invention.
Figures 6A-F are schematic views of various splice configurations that may be used to bond a plurality of composite panels together in accordance with an embodiment of the invention.
Figure 7 is a view of a fuselage portion created according to an embodiment of the invention.
Figure 8 is a view of a larger structure formed by a plurality of composite structure panels according to an embodiment of the invention.

### DETAILED DESCRIPTION OF DRAWINGS

The present disclosure will now be described more fully with reference to the Figures in which various embodiments of the present invention are shown. The subject matter of this disclosure may, however, be embodied in many different forms and should not be construed as being limited to the embodiments set forth herein.

In an embodiment of the invention, composite structures may be formed using precured flat face sheets. The flat sheets may be formed from a layup of composite materials or pre-impregnated composite materials and then cured in a flat condition. The cured flat sheets may be drape formed into a shape by fitting it to a tool, and attached to a core with an adhesive. After the adhesive undergoes a curing process, the resulting product may be assembled into a structure. The flexibility of a thin face sheet allows the face sheet to be formed onto a curved surface. The thickness of the sheets may be tailored for any structural requirements and to fit a required radii of curvature of the final structure.

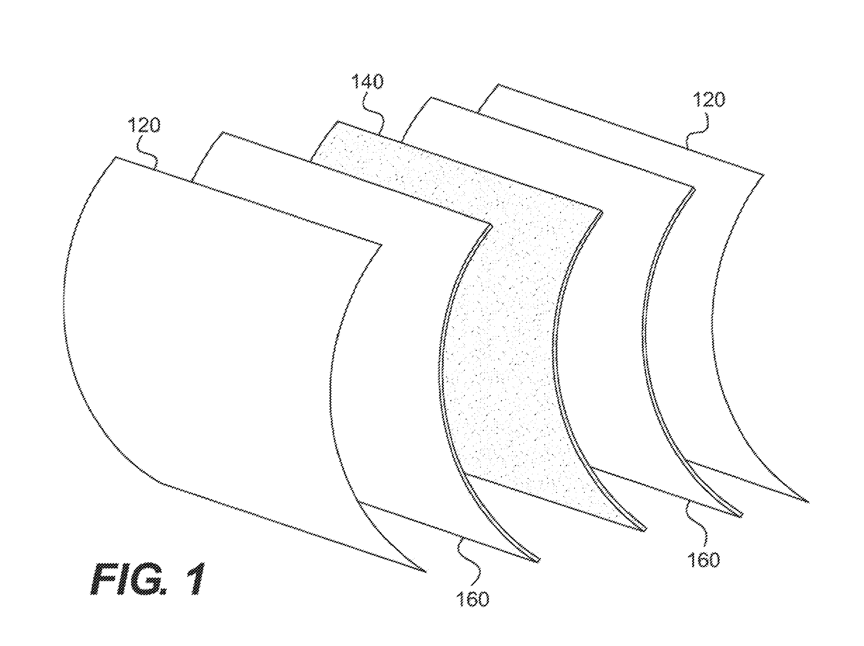

Figure 1 illustrates a composite structure panel 100 in accordance with an embodiment of the invention. As described above, the face sheets 120 may be pre-cured and then attached to both sides of a core 140 with an adhesive layer 160. The adhesive layer 160 can then be cured for bonding the face sheets 120 to the core 140.

Face sheets 120 may have a thickness that allows them to be draped or formed into a curved shape and then bonded to core 140. Face sheets 120 may be formed from fibers and thermoplastic or thermoset resins that are cured or set in a flat condition. The composite face sheets may also be formed using pre-impregnated fibers or layups. Any type of fiber may be used in the construction of the face sheets including, but not limited to, carbon, glass, aramid, or other fibers known to those of skill in the art. In one embodiment, for example, face sheet 120 may be formed from a MTM 45 resin, 6 plies carbon fiber (crows foot weave) sheet having a total thickness of 1.270 mm (0.050 inches).

Core 140 may be an aluminum or metallic honey comb core. It should be understood, however, that the core 140 may be formed from a non-metallic honeycomb core, a foam core, or any other suitable material known to those of skill in the art. For example, one embodiment of the core 140 may be a Nomex 1.361 kg (3 lb), 25.40 mm (1 inch) thick, 1/8 inch cell HRH 10 core. In another embodiment of the invention, the core may be a composite or metallic frame structure.

Adhesive layers 160 may comprise either film adhesive (heated cauls) or paste adhesive, such as a FM300-2 adhesive, that is applied according to known methods. Other suitable adhesives known to those of skill in the art may also be used to bond the face sheets 120 to the core 140. The adhesive layers 160 may be set or cured by, for example, autoclave curing, oven curing, platen press curing, or other known methods for curing.

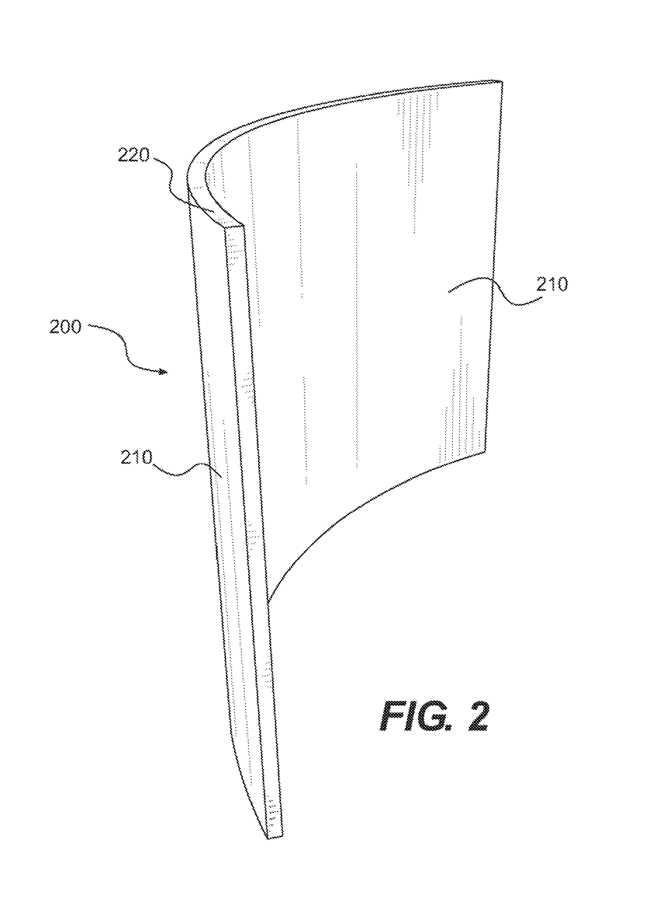

Figure 2 shows a completed composite structure panel 200 in accordance with an embodiment of the invention. The previously flat pre-cured face sheets 210 have been bonded to a core 220 and formed according to a desired shape of the panel. The composite structure panel 200 illustrated in Figure 2 may be utilized in the manufacture of aircraft to form, for example, fuselages, nacelles, cowlings, or other complex structures.

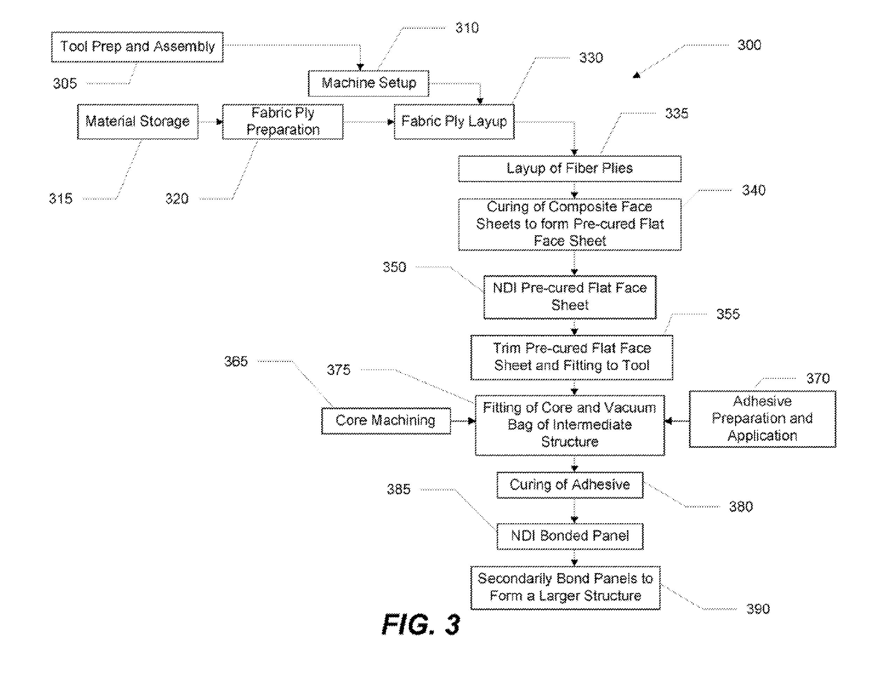

Figure 3 shows an example of a method 300 for creating a composite structure panel, such as the composite structure 200 shown in Figure 2. In at least one embodiment of this invention, method 300 may be used form composite structures with increased structural quality and strength.

Initial steps of tool preparation and assembly in step 305, machine setup in step 310, material storage in step 315, and fabric ply preparation in step 320 may allow for fabric ply lay up in step 330. The fabric ply preparation in step 320 may involve packaging multiple fabric plies. The fabric ply layup in step 330 may orient the fabric plies into fiber plies. The fiber plies then may undergo a layup process, for example, automatic tape layup (ATL), in step 335 to form a composite face sheet. Although these steps form one example of preparing a composite face sheet, any method known to those of skill in the art may also be used to form the composite face sheets.

The composite face sheet may undergo curing in step 340 or other known methods of setting the matrix or resin in the composite face sheet, resulting in the formation of a precured flat face sheet. According to one embodiment of the invention, the curing in step 340 may include autoclave curing, platen press curing, and/or oven curing, for example. Non-destructive inspection (NDI) in step 350 of the pre-cured flat face sheets may be used to provide a measure of quality control to reduce the scrap rate.

In step 355, the pre-cured flat face sheet is fit to a tool. The pre-cured flat face sheet may be trimmed in step 355 in order to fit the tool as well as a desired application or shape. The tool has a curved surface.

Before the face sheet becomes part of a composite structure panel, core machining in step 365 may take place to form a core to the appropriate application or shape. Core machining in step 365 may include embedding structural components into the core to provide a frame for structural features, such as a window frame around a window opening, for example.

An adhesive may be prepared and applied to the face sheets and/or the core in step 370. Adhesive preparation and application in step 370 may include combining different adhesives together. In one example, film adhesive preparation in step 370 may include applying adhesive to the core. It should be understood that adhesive may be applied to the core and/or face sheets in accordance with methods known to those of skill in the art.

In step 375, the core may be attached to the pre-cured face sheet to form an intermediate composite structure, as the adhesive would hold the core to the pre-cured face sheet. Once the intermediate composite structure is prepared, shaping of the composite structure panel may take place as the core and pre-cured flat face sheet are vacuum bag formed in step 375 to a curved tool, for example, with the film adhesive located between the core and the sheet. Step 375 may also include embedding structural components in the precured flat face sheet and/or the core in order to create a structural feature, such as, for example, a window or door frame.

In step 380, the adhesive may be cured in the oven to form a bonded composite panel, such as composite panel 200 shown in Figure 2. The pre-cured flat face sheets may have a smooth surface on both the inner and outer surfaces of the face sheet, resulting in improved attachment to the core. This may simplify step 380 of forming the composite structure. Non-destructive inspection (NDI) of the bonded panel in step 385 may be used to maintain quality control.

Afterward, multiple composite structure panels may be bonded in step 390 to form a larger or more complex structure. As discussed below, in one embodiment of the invention, a barrel structure may be formed by using multiple splices in the tool.

As will be appreciated by those of skill in the art, the curing steps 340 and 380 need not take place in an autoclave because the face sheets may be pre-cured in a flat condition. Furthermore, because pre-cured sheets are used, the cure time required for step 380 may be reduced compared to the cure time for the previously described "one shot" process. For example, in some embodiments of the invention the cure time in step 380 may be approximately 2.5 hours, which is significantly less than the 8 hours typically required from a conventional autoclave curing process.

In addition, the use of non-cured face sheets may often result in dimpling and wrinkling, which may be aggravated by the porosity of the non-cured face sheets during a conventional curing process. By using a pre-cured face sheet, the method 300 may avoid this problem and result in improvements in a material properties. For example, an improvement of 10% may be achieved in some case with respect to the structural weight of composite structures. Pre-curing the face sheets may prevent co-cured porosity and wrinkling that may occur during the curing process involving non-cured face sheets. Elimination of co-cured porosity and wrinkling may yield a product that performs optimally in a structural application with improved aesthetics.

Furthermore, the use of flat pre-cured face sheets may allow for simplified tooling, fabrication, inspection, and adhesive application because these steps may take place before the flat pre-cured face sheets are attached to the core. One additional benefit of the pre-cured face sheet approach may be the elimination of part deformation or "potato chipping" that occurs with a "one shot" process. "Potato chipping" may occur when an area of a face sheet becomes wavy or rippled during the "one shot" process.

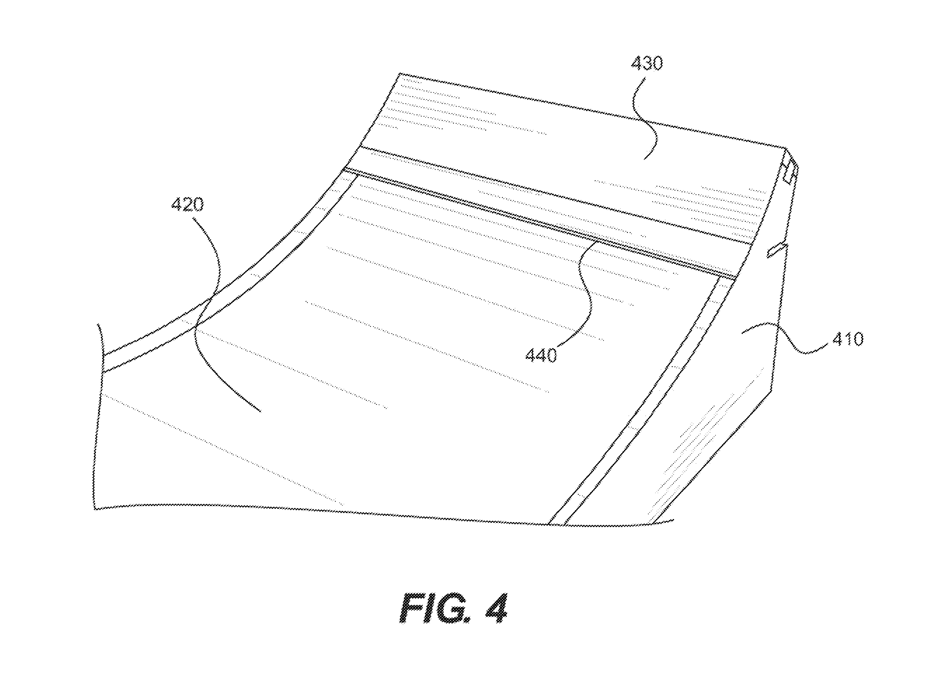

Figure 4 shows a tool 410 that may be used to fit of a pro-cured face sheet 420 to a curved surface 430 of the tool 410. This figure illustrates method step 375 of Figure 3 before the core 140 is fitted to the face sheet 120. A spacer 440 may be used to align the pre-cured face sheet 420 to the curved surface 430, such that the precured face sheet 420 fit into a desired shape. The spacer 440 may be used to ensure a tight fit of the pre-cured face sheets 420 to the tool 410, such that there is no wrinkling or deformation of the pre-cured face sheet 420 prior to curing of the applied adhesive. This may also result in improved quality control by reducing the scrap rate.

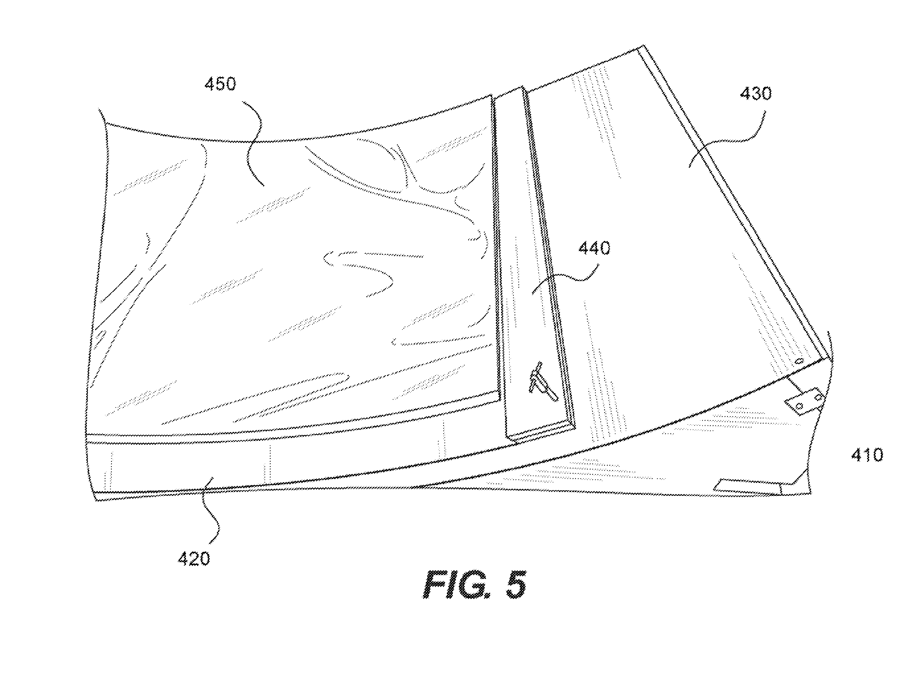

Once the pre-cured face sheet is properly aligned, the core may then be fitted to the precured face sheet. Figure 5 shows the tool 410 after placement of a core 450 to a pre-cured face sheet 420. At this point, the pre-cured face sheet 420 may be fitted to a curved surface 430 of the tool 410 and an adhesive may have been applied to the pre-cured face sheet. 420. As a result, the tool 410 assists in properly aligning the core 450 to the pre-cured face sheet 420. This figure illustrates method step 375 from Figure 3 prior to the curing process. The core 450 and the pre-cured face sheet 420 may be fitted by using a spacer 440 shown with additional detail. In one embodiment of the invention, once the core 450 and the precured face sheet 420 are properly fit to the tool 410, the pre-cured face sheet 420 and the core 450 may be placed in a vacuum bag and suctioned in order to allow for a tighter fit between the pre-cured face sheet 420 and the core 450. After the suction takes place through the use of the vacuum bag, curing of the adhesive apphed between the pre-cured face sheet 420 and the core 450 may take place in order to form a composite panel.

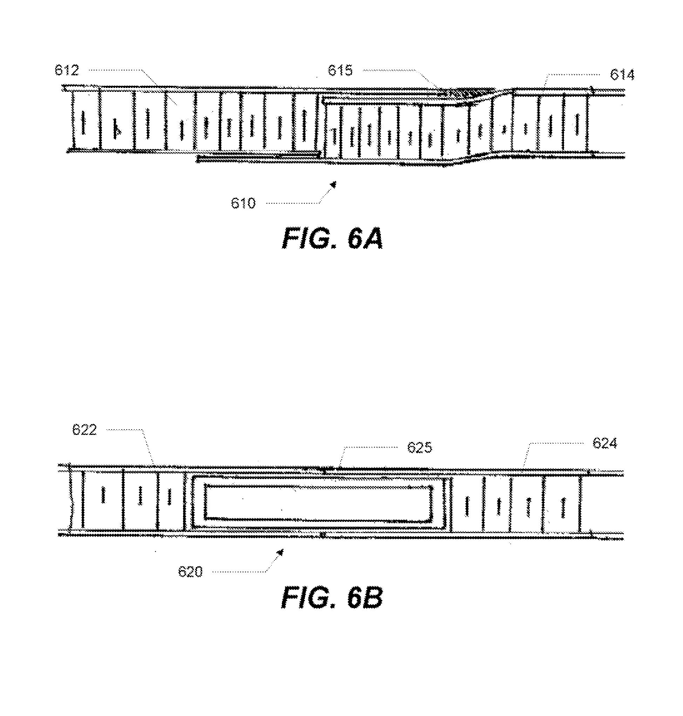

After forming multiple composite panels as discussed above, the composite panels may be assembled or combined to form larger structures as discussed with respect to step 385. Figures 6A-F show examples of different splice configurations that may be used to for bond multiple composite structure panels together. In one embodiment, composite panels may comprise, for example 1.270 mm (0.050 inch) thick skins bonded to a 25.40 mm (1.000 inch) thick cores. Prior attempts to bond panels together have often required tapering of the core's thickness. The use of pre-cured face sheets during the formation of composite panel allow panels to be connected without tapering the core's thickness.

In a first splice configuration illustrated in Figure 6A, an overlap splice configuration 610 may be used to bond a first panel 612 and a second panel 614 during the panel assembly. A joggle 615, such as a fastening notch, may be created by bending the second panel 614 such that the second panel 614 overlaps a portion of the first panel 612. The overlapping panels may be bonded according to known methods. The joggle 615 may prevent slippage between the panel 612 and the second panel 614, while also allowing for a substantially smooth transition between the two panels as shown in the top surface.

In a second splice configuration illustrated in Figure 6B, box longeron configuration 620 may be used to bond a first panel 622 and a second panel 624. A box longeron 625 may be configured such that it is positioned between the face sheets and the cores on both panels 622 and 624. The longeron 63.5 may then be bonded to the inside surfaces of the face sheets of the first panel 622 and the second panel 624. The longeron 625 may encompass, for example, a stiffener, a stringer, or a thin strip of wood or metal. Such a configuration may provide a smooth transition between the two panels on the top and bottom of the configuration 620. In addition, the hollow interior of the longeron 625 may be used to hid or organize electrical wiring and other systems in complex structures, such as an aircraft fuselage. The longeron 625 may also provide a structural member in the assembh 620 to support the attachment of interior items in an aircraft fuselage, such as galleys and dividers, for example.

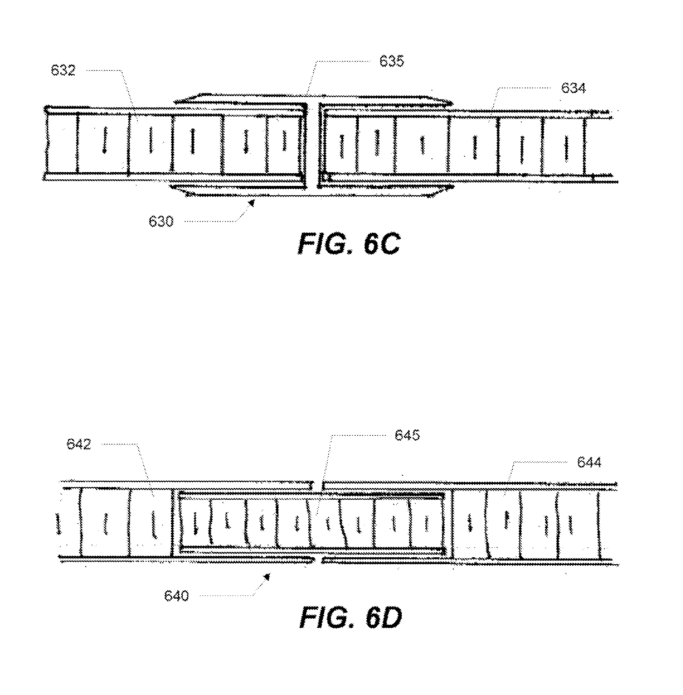

In a third configuration illustrated in Figure 6C. a H longeron configuration 630 may be used to bond a first panel 632 and a second panel 634. The first panel 632 and the second panel 634 may be inserted into either end of a H longeron 635 such that the face sheets of the panels can be bonded to the inside of the H longeron 635. In addition, both the H longeron configuration 630 and the box longeron configuration 620 may be applicable to Vacuum Assisted Resin Transfer Molding (VARTM) process, which is illustrated in part by Figure 4 and step 375 in Figure 3. The VARTM process may provide for an ample bonding surface over the length of the joints created by box longeron 625 and H longeron 635. In one embodiment of the invention, the box longeron 625 and the H longeron 635 may comprise a thin strip of wood or metal, for example.

In a fourth configuration illustrated in Figure 6D, an internal panel splice configuration 640 may be used to bond a first panel 642 and a second panel 644. The internal panel splice configuration 640 may utilize an internal panel 645 formed from a separate composite panel utilizing a smaller core than that of the first panel 642 and the second panel 644. The interne panel 645 may be configured such that the outside surfaces of the face sheets can be bonded to the face sheets of the first panel 642 and the second panel 644. Again, this configuration 640 may result in a smooth transition between the first panel 642 and the second panel 644 on both the upper and lower surfaces of the configuration 640.

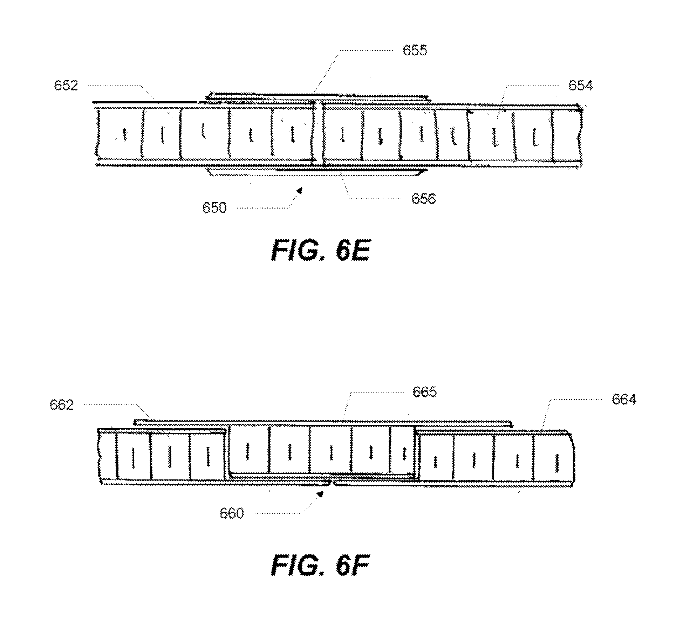

In a fifth configuration illustrated in Figure 6E, an external skin splice configuration 650 may be used to bond a first panel 652 and a second panel 654. The configuration 650 may employ face sheets 655 and 656 which may overlap the edges of the first panel 652 and the second panel 654. The face sheets 655 and 656 may be the same precured face sheets used to create the composite panels 652 and 654 as discussed above.

In a sixth configuration illustrated in Figure 6F, a mixed splice configuration 660 employs a splice 665 that combines elements of the configuration 640 and the configuration 650. The mixed splice configuration 660 may allow for splicing from one side of the panels in an assembly process. In the mixed splice configuration 660, a first panel 662 and a second panel 664 may be bound together by a panel connector 665. At the top of the first panel 662 and the second panel 664, the panel connector 665 may splice in a manner similar to the external splice configuration 650 as the panel connector 665 may bind to the outsides of the panel face sheets. At the bottom of the first panel 662 and the second panel 664, the panel connector 665 may splice in a manner similar to the internal splice configuration as the panel connector 665 may bind to the insides of the panel face sheets.

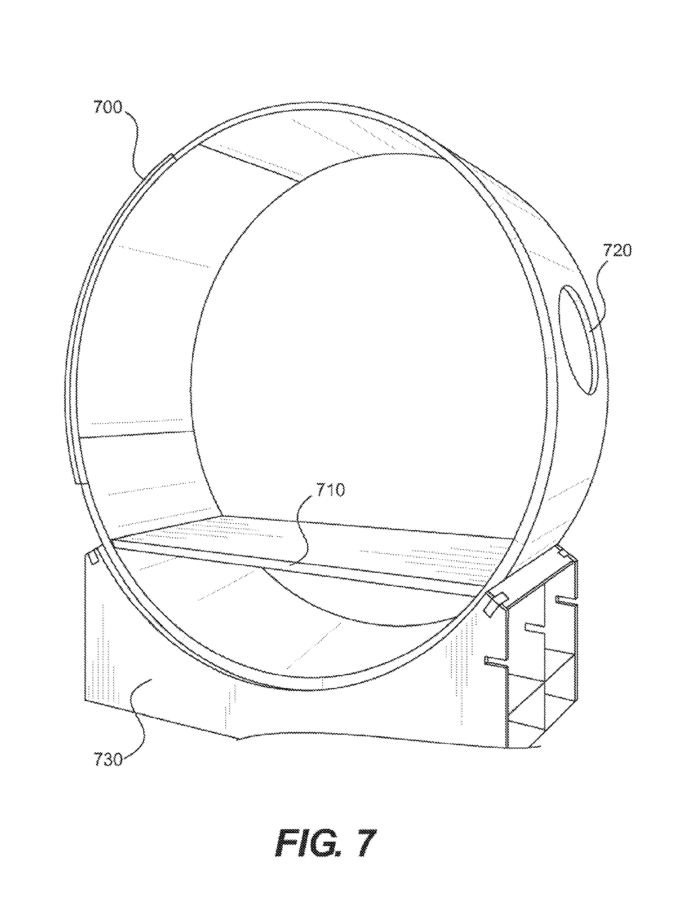

Figure 7 illustrates an embodiment of the invention where composite panels, such as the panel 200 shown in Figure 2. may be combined to form a larger barrel structure 700 by splicing the panels together. Once the panels have been bonded together, the multiple composite structure panels may form the structure 700, which as shown can be formed as a barrel section of a fuselage of an aircraft supported by a curved fitting tool 730. In one example, a Hat composite structure panel 710 may be configured in the structure 700 to form a floor panel. In addition, a structural feature 720 may be created within the structure 700 in order to form an opening, such as a window, In one example, the structural feature 720 may be created by cutting the pre-cured flat sheets and the core in addition to embedding structural components prior to fitting and curing the adhesive. In another example, the structural feature 720 may be created by cutting a composite panel after the adhesive has been cured. It should be understood that the structural features may be created in accordance with other methods known to those of skill in the art.

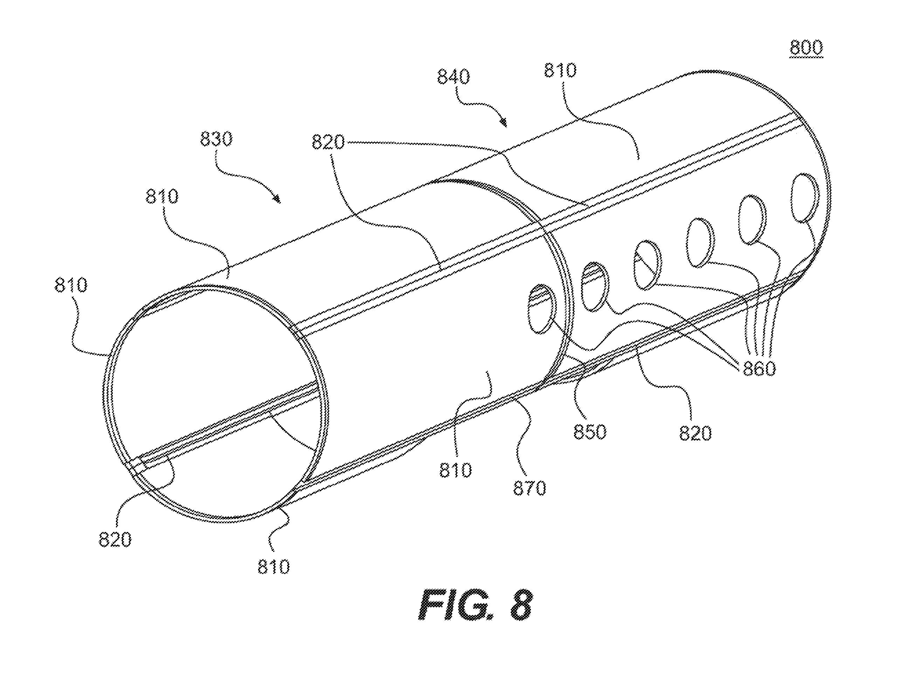

Figures 8 illustrates an embodiment of the invention where a plurality of composite structure panels 810 are bonded in order to form a larger structure 800, such as, for example, an aircraft fuselage. Composite structure panels 810 may be bonded together at joints 820 to form barrel sections 830 and 840. Barrel sections 830 and 840 may be bonded together at joint 830 to form an aircraft fuselage. The joints 820 and 830 may be formed with at least one of the splice configurations illustrated in Figure 6. During creation of the composite structure panels 810, the composite structure panels 810 can be modified to create structural features, such as, for example, a plurality of windows 860. Particular composite structure panels also may be created in order to produce an opening 870 that may later be used, for example, as a door frame. In one example, two different composite structure panels may be cut so that once the two different composite structure panels are joined in one of the aforementioned splice configurations, a door frame or other structural feature may be formed. Other structural features that may be created include a fuselage, a window, a nacelle, a wing, a our a door frame.

Using the processes described above, it is also contemplated that a pre-cured sheet may be prepared by performing a lay up process of a plurality of fibers onto stool. The tool is a curved tool. The plurality of fibers and a matrix material may then be cured to form a pre-cured sheet already fit to the curved tool. An adhesive may be disposed between the pre-cured sheet and a core The adhesive may then be cured to form a composite structure.

According to another embodiment of the invention, a monolithic structure can be created by disposing a pre-cured face sheet upon either a composite or metallic frame structure, In one example, the composite or metallic frame structure may act as a core, The monolithic structure may be used to form at least one of: a window, a fuselage, a nacelle, a wing, a cowling, or a door frame, for example.

According to another embodiment of the invention, windows and doors openings may be formed at the time of fabrication by bonding a pre-cured structural window frame or door frame into the composite panel during the process of bonding the pre-cured face sheets to the core.

Although some of the embodiments of the invention have been described with reference to forming composite structures for an aircraft (such as a fuselage), the methods of forming composite panels and larger structures may be used to form other devices and composite structures.

The foregoing descriptions of specific embodiments of the present invention are presented for purposes of illustration and description. They are not intended to be exhaustive or to limit the scope of the invention, which is defined by the following claims. Obviously, many modifications and variations are possible in view of the above teachings.

## Claims

1. A method for manufacturing a composite structure (200), the method comprising :
curing a composite sheet that comprises a thermoset resin and that is in a flat condition to form a pre-cured flat sheet (420),
fitting the pre-cured flat sheet (420) to a tool (410), wherein the tool (410) comprises a curved surface (430),
disposing an adhesive (160) between the pre-cured flat sheet (420) on the tool (410) and a core (450) to form an intermediate structure; and
curing the adhesive (160) between the core (140, 450) and the pre-cured flat sheet (120, 210, 420) to form a composite structure (200).

2. The method of claim 1, wherein disposing an adhesive between the pre-cured flat sheet on the tool (410) and the core (450) to form an intermediate structure comprises:
disposing the adhesive (160) on the core (450); and
placing the core (450) onto the pre-cured flat sheet (420) on the tool (410).

3. The method of claim 1 or 2, wherein curing the adhesive (160) comprises at least one of the following; autoclave curing, platen press curing, or oven curing.

4. The method of one of claim 1 or 2, further comprising:
disposing a second adhesive (160) between a second pre-cured face sheet (120) and a second side of the core (140) prior to curing the adhesive (160) and the second adhesive.

5. The method of claim 1, furhter comprising:
placing the intermediate structure in a vacuum bag prior to curing the adhesive (160).

6. The method of one of claims 1 to 5, further comprising:
bonding the composite structure (200) to a second composite structure.

7. The method of claim 6, wherein bonding the composite structure to the second composite structure comprises forming between the composite structure and the second composite structure at least one of: an overlap splice configuration (610); a box longeron configuration (620); a H longeron configuration (630); an internal splice configuration (640); an external splice configuration (650); and a mixed splice configuration (660) and/or bonding the composite structure to the second composite structure comprises forming at least one of : a window (720, 860), a fuselage, a nacelle, a wing, a cowling and a door frame.

8. The method of one of claims 1 to 7, further comprising:
embedding a structural component into the intermediate structure in order to form a structural feature (720,860).

9. An intermediate composite structure for use in a composite structure (200), the intermediate composite structure comprising :
a pre-cured face sheet (420) fit to a tool, wherein the tool (410) comprises a curved surface (430), and wherein the pre-cured face sheet comprises a composite sheet that comprises a thermoset resin that has been cured while the composite sheet was in a flat condition,
a core (450); and
an undured adhesive (160) between the pre-cured face sheet (420) and the core (450) to connect the pre-cured face sheet (420) to the core (450) and to form an intermediate composite structure.

10. The structure of claim 9, wherein the intermediate composite structure is placed in a vacuum bag.

11. The structure of one of claims 9 or 10, further comprising a second pre-cured face sheet bonded to a second side of the core (140, 450) with a second adhesive.

12. The structure of one of claims 9 to 11, wherein the adhesive (160) comprises at least one of: film adhesive, heated cauls, paste adhesives, or a FM300-2 adhesive.

13. The structure of one of claims 9 to 12, wherein the core (140, 450) comprises at least one of: a metallic frame, a composite frame, a honeycombe core, a metallic honeycombe core, a non-metallic oneycombe core,a foam core, or a Nomex 1.361kg, 3.175 mm cell HRH 10 core.

14. The structure of one of claims 9 to 13, wherein the pre-cured face sheet (120, 420) comprises at least one of: thermoplastic resin, thermoset resin, carbon fibers, glass fibers, aramid fibers, or a MTM 45 resin, 6 plies carbon fiber (crows foot weave) sheet.

15. The structure of one of claims 9 to 14, further comprising a structural component (720, 860) embedded into the intermedite composite structure.

## Patentansprüche

1. Verfahren zum Herstellen einer Verbundstruktur (200), das Verfahren aufweisend:
Aushärten einer Verbundbahn, die ein wärmehärtbares Harz aufweist und in einem flachen Zustand vorliegt, zum Ausbilden einer vorgehärteten flachen Bahn (420),
Auflegen der vorgehärteten flachen Bahn (420) auf ein Werkzeug (410), wobei das Werkzeug (410) eine gekrümmte Oberfläche (430) aufweist,
Aufbringen eines Klebstoffs (160) zwischen der vorgehärteten flachen Bahn (420) auf dem Werkzeug (410) und einem Kern (450), um eine intermediäre Struktur auszubilden,
Aushärten des Klebstoffs (160) zwischen dem Kern (140, 150) und der vorgehärteten flachen Bahn (120, 210, 420), um eine Verbundstruktur (200) auszubilden.

2. Verfahren nach Anspruch 1, wobei das Aufbringen eines Klebstoffs zwischen der vorgehärteten flachen Bahn auf dem Werkzeug (410) und dem Kern (450), um eine intermediäre Struktur auszubilden, aufweist:
Aufbringen des Klebstoffs (160) auf den Kern (450); und
Platzieren des Kerns (450) auf die vorgehärtete flache Bahn (420) auf dem Werkzeug (410).

3. Verfahren nach Anspruch 1 oder 2, wobei das Aushärten des Klebstoffs (160) mindestens eines von folgendem aufweist: Autoklavhärten; Pressplattenhärten oder Ofenhärten.

4. Verfahren nach einem von Anspruch 1 oder 2, ferner aufweisend:
Aufbringen eines zweiten Klebstoffs (160) zwischen einer zweiten, vorgehärteten Deckbahn (120) und einer zweiten Seite des Kerns (140) vor dem Aushärten des Klebstoffs (160) und des zweiten Klebstoffs.

5. Verfahren nach Anspruch 1, ferner aufweisend:
Platzieren der intermediären Struktur in einen Vakuumbeutel vor dem Aushärten des Klebstoffs (160).

6. Verfahren nach einem der Ansprüche 1 bis 5, ferner aufweisend:
Anbinden der Verbundstruktur (200) an eine zweite Verbundstruktur.

7. Verfahren nach Anspruch 6, wobei das Anbinden der Verbundstruktur an die zweite Verbundstruktur das Ausbilden zwischen der Verbundstruktur und der zweiten Verbundstruktur mindestens eines von: einer überlappenden Verbindungskonfiguration (610); einer H-Trägerkonfiguration (630); einer inneren Verbindungskonfiguration (640); einer äußeren Verbindungskonfiguration (650); und einer gemischten Verbindungskonfiguration (660) aufweist und/oder wobei das Anbinden der Verbindungsstruktur mit der zweiten Verbindungsstruktur das Ausbilden mindestens eines von: einem Fenster (720, 860), einem Rumpf, einer Gondel, eines Flügels, einer Verkleidung und eines Türrahmens aufweist.

8. Verfahren nach einem der Ansprüche 1 bis 7, ferner aufweisend: Einbetten einer Strukturcomponente in die intermediäre Struktur zum Ausbilden eines Strukturmerkmals (720, 860).

9. Intermediäre Struktur zur Verwendung in einer Verbundstruktur (200), aufweisend:
eine vorgehärtete Deckbahn (420), die auf ein Werkzeug aufgelegt ist, wobei das Werkzeug (410) eine gekrümmte Oberfläche (430) aufweist, und wobei die vorgehärtete Deckbahn eine Verbundbahn besitzt, die ein wärmehärtbares Harz umfasst, das bei in flachem Zustand der Verbundbahn ausgehärtet wurde,
einen Kern (450); und
einen nicht ausgehärteten Kunststoff (160) zwischen der vorgehärteten Deckbahn (420) und
dem Kern (450), um die vorgehärtete Deckbahn (420) an den Kern (450) anzubinden und eine intermediäre Verbundstruktur auszubilden.

10. Intermediäre Struktur nach Anspruch 9, wobei die intermediäre Verbundstruktur in einen Vakuumbeutel platziert ist.

11. Intermediäre Struktur nach einem der Ansprüche 9 oder 10, ferner aufweisend eine zweite vorgehärtete Deckbahn, die an eine zweite Seite des Kerns (140, 450) mit einem zweiten Klebstoff gebunden ist.

12. Intermediäre Struktur nach einem der Ansprüche 9 bis 11, wobei der Klebstoff (160) mindestens eines von: einer Klebefolie, beheizter Zwischenplatten, pastöser Klebstoffe oder einem FM300-2 Klebstoff aufweist.

13. Intermediäre Struktur nach einem der Ansprüche 9 bis 12, wobei der Kern (140, 450) mindestens eines von: einem metallischen Rahmen, einem Verbundrahmen, einem Wabenkern, einem metallischen Wabenkern, einem nicht-metallischen Wabenkern, einem Schaumkern oder einem Nomex Kern HRH 10 mit 1,361 kg und 3,175mm Zellen aufweist.

14. Intermediäre Struktur nach einem der Ansprüche 9 bis 13, wobei die vorgehärtete Deckbahn (120, 420) mindestens eines von: Kohlefasern, Glasfasern, Aramidfasern, oder einer Bahn mit MTM 45 Harz und sechs Lagen Kohlefaser (Krähenfußgewebe) aufweist.

15. Intermediäre Struktur nach einem der Ansprüche 9 bis 14, ferner aufweisend eine Strukturkomponente (720, 860), die in die intermediäre Verbundstruktur eingebettet ist.

## Revendications

1. Procédé de fabrication d'une structure composite (200), le procédé comprenant :
- le durcissement d'une feuille composite qui comprend une résine thermodurcissable et qui est dans un état plat pour former une feuille plate pré-durcie (420) ;
- l'adaptation de la feuille plate pré-durcie (420) sur un outil (410), dans lequel l'outil (410) comprend une surface incurvée (430) ;
- la disposition d'un adhésif (160) entre la feuille plate pré-durcie (420) sur l'outil (410) et un noyau (450) pour former une structure intermédiaire ; et
- le durcissement de l'adhésif (160) entre le noyau (140, 450) et la feuille plate pré-durcie (120, 210, 420) pour former une structure composite (200).

2. Procédé de la revendication 1, dans lequel la disposition d'un adhésif entre la feuille plate pré-durcie (410) et le noyau (450) pour former une structure intermédiaire comprend :
- la disposition de l'adhésif (160) sur le noyau (450) ; et
- le placement du noyau (450) sur la feuille plate pré-durcie (420) sur l'outil (410).

3. Procédé de la revendication 1 ou 2, dans lequel le durcissement de l'adhésif (160) comprend au moins l'un des durcissements suivants : par autoclave, par presse à platine, ou dans un four.

4. Procédé de l'une des revendications 1 ou 2, comprenant en outre :
- la disposition d'un second adhésif (160) entre une seconde feuille de face pré-durcie (120) et une seconde face du noyau (140) avant de durcir l'adhésif (160) et le second adhésif.

5. Procédé de la revendication 1, comprenant en outre :
- le placement de la structure intermédiaire dans une poche à vide avant de durcir l'adhésif (160).

6. Procédé de l'une des revendications 1 à 5, comprenant en outre :
- la liaison de la structure composite (200) avec une seconde structure composite.

7. Procédé de la revendication 6, dans lequel la liaison de la structure composite avec la seconde structure composite comprend la formation entre la structure composite et la seconde structure composite d'au moins l'une des configurations suivantes : une configuration à jonction par recouvrement (610) ; une configuration de longeron en caisson (620) ; une configuration de longeron en H (630) ; une configuration à jonction interne (640) ; une configuration à jonction externe (650) ; et une configuration à jonction mixte (660) et/ou la liaison de la structure composite avec la seconde structure composite comprend la formation d'au moins l'un des éléments suivants : un hublot (720, 860), un fuselage, une nacelle, une aile, un capot et un châssis de porte.

8. Procédé de l'une des revendications 1 à 7, comprenant en outre :
- l'intégration d'un composant structurel dans la structure intermédiaire afin de former une particularité structurelle (720, 860).

9. Structure composite intermédiaire à utiliser dans une structure composite (200), la structure composite intermédiaire comprenant :
- une feuille de face pré-durcie (420) adaptée sur un outil, dans laquelle l'outil (410) comprend une surface incurvée (430), et dans laquelle la feuille de face pré-durcie comprend une feuille composite qui comprend une résine thermodurcissable qui a été durcie pendant que la feuille composite était dans un état plat,
- un noyau (450) ; et
- un adhésif non durci (160) entre la feuille de face pré-durcie (420) et le noyau (450) pour connecter la feuille de face pré-durcie (420) au noyau (450) et pour former une structure composite intermédiaire.

10. Structure de la revendication 9, dans laquelle la structure composite intermédiaire est placée dans une poche à vide.

11. Structure de l'une des revendications 9 ou 10, comprenant en outre une seconde feuille de face pré-durcie liée à une seconde face du noyau (140, 450) avec un second adhésif.

12. Structure de l'une des revendications 9 à 11, dans laquelle l'adhésif (160) comprend au moins l'un des éléments suivants : film adhésif, plaques de presse chauffées, pâtes adhésives, ou un adhésif FM300-2.

13. Structure de l'une des revendications 9 à 12, dans laquelle le noyau (140, 450) comprend au moins l'un des éléments suivants : un châssis métallique, un châssis composite, un noyau en nid d'abeille, un noyau en nid d'abeille métallique, un noyau en nid d'abeille non métallique, un noyau en mousse, ou un noyau Nomex HRH 10 de 1,361 kg, à cellule de 3,175 mm.

14. Structure de l'une des revendications 9 à 13, dans lequel la feuille de face pré-durcie (120, 420) comprend au moins l'un des éléments suivants : des fibres de carbone, des fibres de verre, des fibres aramides, ou une feuille de résine MTM 45 en fibres de carbone 6 plis (armure en pieds de corbeaux).

15. Structure de l'une des revendications 9 à 14, comprenant en outre un composant structurel (720, 860) intégré dans la structure composite intermédiaire.
